# EUROPEAN PATENT APPLICATION

(11) **EP 4 575 431 A1**
(43) Date of publication of application: **25.06.2025**
(21) Application number: 23307343.6
(22) Date of filing: 22.12.2023
(51) Int. Cl.: G01J 5/00, G01J 5/061, G01J 5/07, G01J 5/08, G01J 5/10

(54) **AN IR BOLOMETER FOR UV TO SOFT X-RAY POWER RADIATION MEASUREMENT WITH INDEPENDENT LINES OF SIGHT**

(71) Applicant: Commissariat à l'Energie Atomique et aux Energies Alternatives, 75015 Paris (FR); American University Of Beirut, Beirut 1107-2020 (LB)
(72) Inventor: DEVYNCK, Pascal, 13108 Saint-Paul-lès-Durance Cedex (FR); ANTAR, Ghassan, 11-0236 BEIRUT (LB)
(74) Representative: Atout PI Laplace

(57) **Abstract**

A bolometer assembly comprising a collimator structure (4B) having a front surface for entry of radiation into the bolometer assembly, a conversion unit (3) having a first and second opposite faces, the first face (3A) being orientated towards the said front surface, the conversion unit (3) being configured to perform absorption of radiations through the first face in the UV to soft X-ray range and, in reaction to said absorption, emit IR radiations through the second face (3B), the bolometer further comprising an IR detector unit (2) having on an imaging surface several pixels sensors, said imaging surface being directed toward the second face.

The collimator structure comprises separate internal ducts (6B) each delimited by walls (6Bw) and each extending from a respective aperture in the front surface to a respective conversion surface of the conversion unit (3). These ducts define the independent lines of sight of the bolometer assembly.

Each independent line of sight can be calibrated, giving the UV to IR conversion curve.

## Description

### Technical context

The invention relates to power measurement in the ultra-violet (UV) and soft X-ray range, with applications in a variety of fields like nuclear fusion, plasma physics, and medical imaging.

Devices called bolometers (the prefix bolo- referring to radiations) are known and used to measure the emitted power of many types of radiations such as UV and soft X-ray radiations, which are considered, in this presentation, high-energy radiations.

There are several types of radiation measurement devices. For example, thermopiles measure the infrared radiation emitted by a material at any temperature using the Seebeck effect between two different metals. Pyroelectric detectors use crystals that have permanent electrical polarization. The incident light modifies this polarization with an amount that is proportional to its intensity. Semiconductor bolometers use silicon photodiodes that convert UV radiation into electric current.

In metal-foil bolometers, a metal foil or layer (the metal can be gold or platinum) absorbs the radiation uniformly in the UV and soft X-ray range. The resulting temperature rise causes an increase in its resistance, which is measured using the imbalance of a Wheatstone bridge in which the bolometer foil is included.

However, known bolometers, including metal-foil bolometers, have difficulties operating in harsh environments such as high temperatures or high neutron fluxes. Moreover, it is difficult and expensive to replace them when needed.

Additionally, bolometric cameras are composed of many parts with many elements that are bolted, welded, or otherwise assembled. Their design process is complicated and must consider mechanical assembly limitations. Because of these constraints, they are in general bulkier than what is desirable.

The cost and availability of the detection unit are always an issue in known metallic-foil bolometers.

In general, the detection foil and measuring circuit (Wheatstone bridge) are not separated. The channels can be grouped in a block of four. This considerably complicates the replacement and adds additional cost when one of them fails.

When used on fusion devices, metallic foil bolometers are mounted in rows. The front side of the detectors is exposed to radiation through a pinhole or slit aperture. A tomographic analysis is then used to recover a two-dimensional view of the radiated power by combining cameras observing the plasma from different angles.

In infrared (IR) video bolometers, a large metal foil is attached to a copper frame. The foil is exposed to plasma radiation through a pinhole, which allows a wide-angle coverage of the radiation volume. An IR camera views the backside of the foil array through an IR transmitting window.

IR video bolometers have many inconveniences that render their use limited. The first one is that the heat caused by the absorbed radiation is diffusing across the surface of the large gold foil. An inversion of the heat equation propagation is mandatory to recover the correct image of the radiated power. The time resolution of the diagnostic is limited by the diffusion time of the heat. Secondly, the IR emissivity is not constant across the surface of the gold foil. A scan of this surface with a laser is necessary to recover a correct local emissivity. Up to now, no calibration has been made and only images were obtained. Peterson, Rev. Sci. Instrum., 71, 3696 (2000). However, very recently a complete calibration procedure was attempted for a bolometer on MAST Upgrade, Federici F et al., Rev. Sci. Instrum. 94, 033502 (2023). This calibration is performed by measuring experimentally the constants involved in the thermal equilibrium of the foil, which allows for calculating the total radiated power absorbed by the foil.

### Definition of the invention and associated advantages

The invention relates to a new way to conduct calibrated radiation measurements in the range of UV to soft X-rays.

The present disclosure shows a new type of bolometer, which solves the identified problems with at least the same sensitivity as known bolometers but with higher robustness to severe conditions and at a reasonable cost. It opens a new pathway to conduct radiation measurements in the range of UV to soft X-rays.

It is based on an integrated collimator structure, which allows obtaining a user-defined number of independent lines of sight.

The invention is based on a bolometer assembly comprising:

A collimator structure allowing the entry of radiation toward a conversion unit, that can be equipped with metallic conversion foils with one face exposed to radiation (front).

Each foil is designed to perform absorption of radiation in the UV and soft X-ray range.

This leads to an increase in its temperature and thus to an emission of IR radiation that can be measured on its opposite face (back).

The bolometer assembly further comprises a set of IR detectors in an array forming an imaging assembly, said imaging assembly being directed toward the back face of the foil structure.

This bolometer assembly is especially remarkable because it uses direct (i.e. through IR detectors) infrared detection to measure the power radiated in the UV and soft X-ray range along prescribed lines of sight.

The collimator structure comprises several separate internal ducts each delimited by radiation opaque walls and forming a field of view. Each view extends from a respective aperture in the entry (front) surface to a respective conversion surface, which may be a foil, in the conversion unit. These internal ducts act as individual collimators for the pixel sensors (i.e. IR detectors).

The collimator structure may alternatively be composed of a hollow supporting structure with a slit or pinhole positioned at a chosen distance from the conversion unit. The position of the individual conversion surfaces relative to the collimator slit, defines a unique and independent line-of-sight for each individual conversion surface.

The individual conversion surfaces are spatially separated. Each of the conversion surfaces is associated with at least one IR detector so that the array of the conversion surfaces corresponds to the array of the IR detectors. The IR detectors may be installed close to the conversion surfaces in the detection unit, hence reducing the IR reflections from the surroundings and maximizing the measured signal.

Further features, optional and advantageous, are listed below:
- The bolometer assembly may comprise
- A detection unit that may be composed of a secondary body (which can be 3-D printed) supporting the detectors.
- The conversion unit may be composed of a supporting structure equipped with independent conversion foils, each having its dedicated line-of-sight. Thus, a certain number (MxN) of thin sheets that absorb the UV and/or soft X-rays can be used with corresponding coatings of an IR-emitting material. They provide an image that is MxN pixels. The user according to the field of application can define the size (AxB) and shape of each sheet.
- The bolometer assembly may comprise cooling fluid pipes or water boxes for fluid to circulate around the conversion surfaces of the conversion unit. Cooling allows maintaining a constant temperature around the detection foils, which is very important for IR measurement and allows the bolometer to operate under different temperatures in its environment.

The collimator structure can be constructed with the help of additive manufacturing (3-D printing). This technique renders its design and manufacturing flexible allowing the implementation of water-cooling, the choice of the solid angles for each line-of-sight, and the desired coverage of the radiating object. Additionally, the number of pieces to get the whole camera is much reduced compared to the prior art.
- Each internal duct of the collimator structure forms a field of view that may each have transversal sections that progressively taper from the front surface to the conversion foil structure. This tapering will direct radiations from an area of the front surface to a conversion foil of the size of at least one of the said pixel sensors. The tapering will define the solid angle of the line of sight associated to its pixel sensor.

The individual conversion foil structure may comprise gold or platinum and may be coated with carbon or other material to enhance the IR radiation. It can also be an alloy composed of a metal such as gold and platinum and an IR-radiating element such as carbon.
- The pixel sensors (IR detectors) that measure the IR radiation may be diodes, thermopiles, fibers connected to an IR detection unit, or an IR camera.
- The collimator structure, including the walls may be made of a radiation impervious material. It is indeed preferable that the collimator be made out of materials that are, in the short and long term, unaffected by the flux of high-energy particles such as neutrons or charged particles. These materials can be stainless steel, boron carbide (B4C), silicon carbide (SiC), etc. This allows inherent additional shielding of the bolometer from its environment that could produce high-energy particles.

This invention is also a method of imaging a radiation emitter scene of known geometry. It comprises:
- The design of the internal ducts of the bolometer assembly as mentioned above to form dedicated lines of sight for respective parts of the said radiation emitter scene of known geometry. If a hollow structure with a simple slit is used, the method comprises the calculation of the position of the slit relative to the conversion unit to obtain the independent lines of sight for the conversion surfaces.
- Making the bolometer assembly including the designed internal ducts.
- Calibrating each line of sight associated with the fields of view in the bolometer assembly before usage.

The calibration consists of sending a known UV power through a collimator duct to the associated conversion surface and measuring the IR response of the detector observing the back of the conversion surface. Scanning the UV power will allow obtaining the response function of the IR detector and thus the calibration curve. A chopper may be used to chop the incoming UV power and measure the time response of the conversion surface provided the IR detector is sufficiently fast.
- Eventually perform imaging of the radiation emitter scene with the bolometer assembly having the calibrated lines of sight.

The radiation emitter scene can be a confined plasma or any volume source emitting in the UV to soft X-ray range.

The collimation structure is a solid object in which the various lines of sight are drilled or/and 3D-printed and in which a circulation of fluid is possible to maintain a reference temperature. The number of ducts, and the shape, and size of each internal duct forming a field of view for a line-of-sight is pre-defined by the user according to the foreseen applications. The internal ducts define the solid angle seen by each conversion foil and eventually each IR sensor (IR detector).

Optionally, but in a highly advantageous manner, making the bolometer assembly comprises using three-dimensional printing (3-D additive printing) to create the designed internal ducts forming fields of view. These ducts may have been designed using a computer-assisted design program knowing the geometry of the scene to be imaged. 3-D additive printing is very practical because it allows the cooling to be embedded into the collimator and allows more flexibility in the choice of the number and geometry of the lines of sight.

Cooling can be used to prevent the deformation of the collimator by a change of temperature thus maintaining the integrity of the lines of sight. It also allows the maintenance of a reference temperature around the conversion foils in the conversion unit, which is very important for IR detection. An active cooling by fluids allows the system to work in an environment that is at high temperatures.

The detection unit (named secondary body) which contains the IR imaging sensors can be also 3D-printed with the same material (or a different material) as the collimator block. It can thus be cooled in the same manner as the collimator. Also, it can be radiation and particle-resistant in the same way as the collimator structure.

The number of pieces to assemble to get the whole bolometer system, which is eventually used as a camera, is very much reduced compared to the known art.

The individual detection units or sensors can be composed of commercially available IR detectors that can be replaced easily in case servicing is needed. The detection foils and IR detectors can even be changed independently from each other.

Each of the channels can be accurately calibrated. A consequence of this is that the different lines of sight can be combined to calculate the total radiated power in the field of vision.

### List of Figures

Figure 1A is a cross-sectional view of an imaging device according to an embodiment of the invention.
Figure 1B is an enlargement of the conversion foil of Figure 1A, with the front absorbing the UV or soft X-ray radiation and the back emitting in the IR.
Figure 1C is an enlargement view of Figure 1A between the conversion foil and the IR detection system.
Figure 1D is an enlargement view of the collimation part of the imaging device of Figure 1A.
Figure 1E illustrates a set of MxN collimator channels, each with a size of AxB at the exit, in an inversed depicture of the vacuous and the solid parts.
Figure 2A is a 3D CAD drawing of a bolometer according to the invention. The thick arrows indicate the water cooling in and out.
Figure 2B is a picture of the 3D-printed collimator block following the CAD design shown in Figure 2A.
Figure 3 shows two images of two conversion foils, installed on the surface of the bolometer shown in Figure 2B. The top figure is without UV irradiation, whereas in the bottom figure, one can see the IR radiation of one of the foils after being subject to UV radiation.
Figures 4 and 5 show two calibration curves using an IR camera and a thermopile to measure the infrared radiation obtained with the invention. The x-direction represents the incident UV light intensity and, in the y-direction the measured IR intensity.
Figure 6 shows the manner the invention is implemented.

### Detailed description of one exemplary embodiment

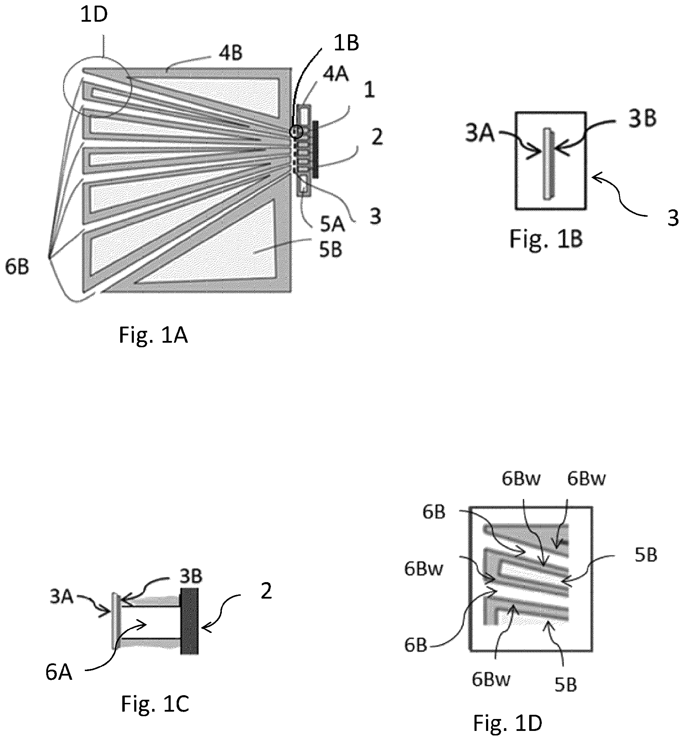

**[****Fig. 1A]** Figure 1A shows a sectional schematic of the infra-red bolometer device according to an embodiment. The device has two parts: a more massive part to the left of the figure that is a collimator block with holes from the left-hand side allowing the radiation to enter and on the right-hand surface are attached the conversion foils. This part collimates the radiation into pixels. The second, smaller part is located on the right-hand side of the figure. It measures pixel by pixel, the infrared radiation produced by the conversion foil after having absorbed the UV and soft X-rays. The detectors in this detection block create electric signals.

Importantly, with the collimator block, each pixel has its dedicated line of sight, as is going to be apparent in the following paragraphs.

Starting from the right of Figure 1A, the smaller part of the device includes a printed circuit board 1, for an IR detector assembly 2. The detection block is constituted of an array of detectors or sensors mounted, for example on a 3D-printed structure.

The device also includes, for the detector block, a parallelepiped body, called herein detector-supporting body 4A, for supporting the elements related to the detection, in particular, the IR detector assembly 2, with its board 1.

A single conversion foil, 3, or conversion foils, 3, form together a conversion structure, on the one hand, and the infrared camera or detectors on the other hand are placed parallel to each other, and they cover roughly the same rectangular area. They are placed on two external parallel surfaces on opposite sides of the detector supporting body 4A. Thus, the circuit board, 1, is mounted on one side of the detector supporting body 4A, and the conversion structure on the other side. The conversion structure is positioned and blocked between the detector supporting body 4A, and the back surface of the collimator body 4B.

The internal volume of the detector supporting body 4A, has tunnels or pipes 5A, very close to the two external surfaces, to allow circulating cooling fluid to cool the conversion foil 3 and, also, if needed, the IR detectors of the IR detector assembly 2.

**[****Fig. 1B****]** As shown in a magnified extract of Figure 1A (fig. 1B), each foil, 3, has a front side, 3A, that has excellent absorption in the UV and soft X-ray range, and a backside, 3B, that is a highly effective emitter in the infra-red range. The IR emission could be enhanced by the presence of a specific material. The second side, 3B, of the conversion foil, 3, which emits infrared waves, is orientated to emit in the direction of the IR detector assembly 2. The foil, 3, can be a gold foil or a gold foil coated on the detector side with carbon. It can also be a platinum foil, or a platinum foil coated on the detector side with carbon. The foil, 3, can also be an alloy having good UV and X-ray absorption capabilities as well as IR emission capabilities.

**[****Fig. 1C]** Figure 1C shows an enlarged view of the detector supporting body 4A and its link with a conversion foil and the camera. The detector supporting body 4A has through holes 6A positioned behind each of the conversion foil foils 3, to enable imaging from the back side 3B, of the IR detector assembly, 2. The through hole 6A has a cross-section shape that is unchanged in shape and size from one side of the detector supporting body 4A to the other side (i.e. the through holes are cylindrical). The shape of their cross-section can be circular or oblong, among other possibilities. The cylindrical through holes allow pairing the conversion surfaces of the array of conversion surfaces to the associated IR detectors in the array of IR detectors for the IR detector assembly 2.

**[****Fig. 1D****]** Turning now to Figure 1D, which represents an enlargement of Figure 1A, the system includes in its more massive part several ducts or fields of view 6B, forming an array of fields of view in a relatively massive body that is the casing of the collimator part.

The collimator body, 4B, has a first planar side, orientated to the left of the figure, and a second planar side parallel to the first, looking to the right of the figure. These two sides are positioned parallel to the IR detector assembly 2, and the conversion foil foils, 3.

There is one field of view 6B - one duct - in the collimator body 4B for each pixel of the IR detector assembly 2.

The fields of view, 6B, are empty volumes (containing air or gas, or depressurized) in the interior of the collimator body, 4B. They are open on the first planar side of the collimator body 4B and have no concavity in their circumferential walls 6Bw all along their extension to their other end to allow the transfer of radiation defined by the solid angle.

The fields of view can taper smoothly (i.e., they can have a conical shape) to define their shape and the desired solid angle.

This first planar side is to be directed towards the object to be imaged, so that the high-energy radiation enters the fields of view 6B. The individual openings of the fields of view, 6B, on the first side of the collimator body, 4B, are rectangular or oblong, and they are arranged in an array. They collectively form a view of the emitting medium or object.

In the thickness of the collimator body 4B, the fields of view, 6B, can be extended in length to have their individual cross-section diminished. The fields of view, 6B, are also directed toward a localized part of the second side of the collimator body 4B. Thus, all the fields of view 6B converge into a rectangular area on the second side of the collimator body 4B, which is smaller than the wide area covered by the openings of the fields of view on the first side. The radiation falling only within this solid angle interacts with the conversion foil.

This collimator block, 4B, can further include pipes or tunnels, 5B, to allow circulating cooling fluid to cool the block around the conversion foil 3.

Each field of view or duct, 6B, has a circumferential wall 6Bw of a material that is opaque to the radiation in the soft X-rays and UV ranges. And behind this wall 6Bw, pipes 5B allow circulating cooling fluid.

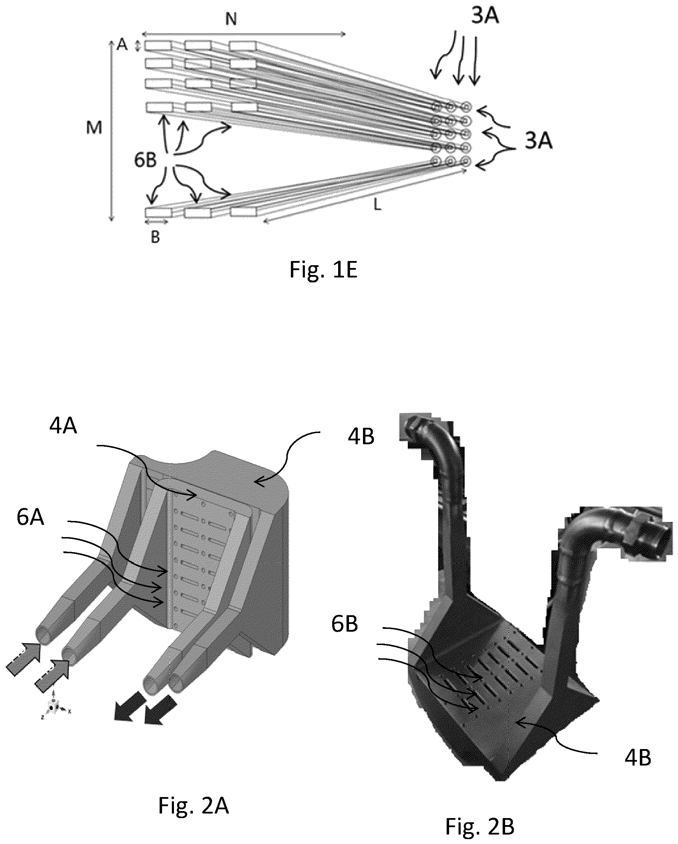

**[Fig. 1E]** Figure 1E shows an inversed figure of the vacuous and the solid parts of the massive part of the imaging system receiving the high-energy radiation, that is the collimator part. The solid parts are not shown and the vacuous of the field of view is shown as a solid part, only for the sake of an easier explanation.

As can be seen, the fields of view 6B, all have a rectangular, or at least oblong, opening on the first side, while on the second side of the collimator body 4B. Each of the lateral dimensions of the cross-section of each field of view diminishes progressively (in a linear manner) from the first to the second side of the collimator body 4B (the fields of view have a conical shape with a cross-section that is rectangular).

References A and B show, for a hole that defines a field of view 6B for a pixel, respectively the width on the first side of the collimator block and the height on the first side of the collimator block. The opening has a ratio length vs width of, for example, 4 to 1.

The reference L shows the depth or length of the fields of view from one side of the collimator body 4B to the other.

There are M rows and N columns of pixels in the imaging system, and thus MxN fields of view 6B.

The dimensions A and B of the fields of view 6B are pre-defined with respect to the dimensions of the object that is to be imaged, which are in many applications quite large, and the requested spatial resolution.

The corresponding dimensions of the fields of view 6B, at the other end of the collimator block, are chosen based on the dimensions of the IR detectors that are used. These dimensions allow all the high-energy radiation entering a field of view to be projected on one conversion foil, 3.

The UV and soft X-ray radiation penetrate the holes (the fields of view 6B) of the collimator block, and, through these holes, they reach the conversion foils 3 on the first side 3A.

**[****Fig. 2A]** Figure 2A shows a three-dimensional view of a prototype collimator block and the detection block that together sandwich the conversion foils (these foils are not visible in this figure). These parts are designed to be 3D printed. The detector supporting body, 4A, and the collimator body, 4B, are visible and contain water circulation cooling.

The entry surface (or front surface) of the detector supporting body, 4A, and the exit surface (or back surface) of the collimator body have similar curvature. The similar curvatures can, naturally, be planar, and in any case, this allows easy access and installation for the foil structure that is placed just between the surfaces of the two bodies having similar - essentially planar - curvatures.

The IR detector assembly is not shown, but the oblong apertures of seven through holes 6A are visible in the back surface of the detector support body A4. The detector itself, as shown in Figure 1B closes these apertures, when the detectors are present.

The thick arrows indicate the entrance and the exit of the cooling fluid in the detector supporting body 4A and the collimator body 4B. It is easier to have the entry of fluid on the same side in the collimator block and in the detection block, and the exit of fluid of both blocks on the opposite side, as is shown, but it is not essential for the design of the system.

In this embodiment, the imaging array is composed of seven rows and two columns. The second column is used for differential measurement. Reference diodes or thermopiles enable differential measurements.

**[****Fig. 2B****]** In Figure 2B, a photograph of the collimator body, 4B, is shown. This part is 3D printed in stainless steel. The surface bearing the exits of the ducts is shown, and thus the fields of view, 6B, are visible. During the operation of the bolometer, their openings are closed by the conversion foils, 3. Upon assembly of the detector supporting body, 4A, and the collimator body, 4B, careful alignment of the through holes, 6A, and of the fields of view, 6B, and of the associated conversion foils, 3 is performed.

Briefly, as shown in figures 1A-1E and 2A and 2B, the conversion foils absorb the high energy radiation. This absorption leads to an increase in the temperature of the conversion foils. The second side of the conversion foils consequently emits infrared radiations, and the infrared sensors capture these infrared radiations.

In an embodiment, diodes or thermopiles are used, but in a very practical embodiment, an infrared camera can be used. In another embodiment, no camera is used, and infrared fibers, one for each pixel, are used and transport the infrared signal to an array of detectors.

Note that a printed circuit board is used to power the sensor and if necessary to perform a differentiation and amplification of the signal before it is sent to a data acquisition module.

In one embodiment, the collimator system and the casing of the detector are made through 3D printing, preferably, with radiation-resistant materials to withstand high neutron flux or high charged particle flux. The material used for 3D printing can be stainless steel. In other embodiments, it is boron carbide B4C or silicon carbide SiC. Several of these materials can be combined.

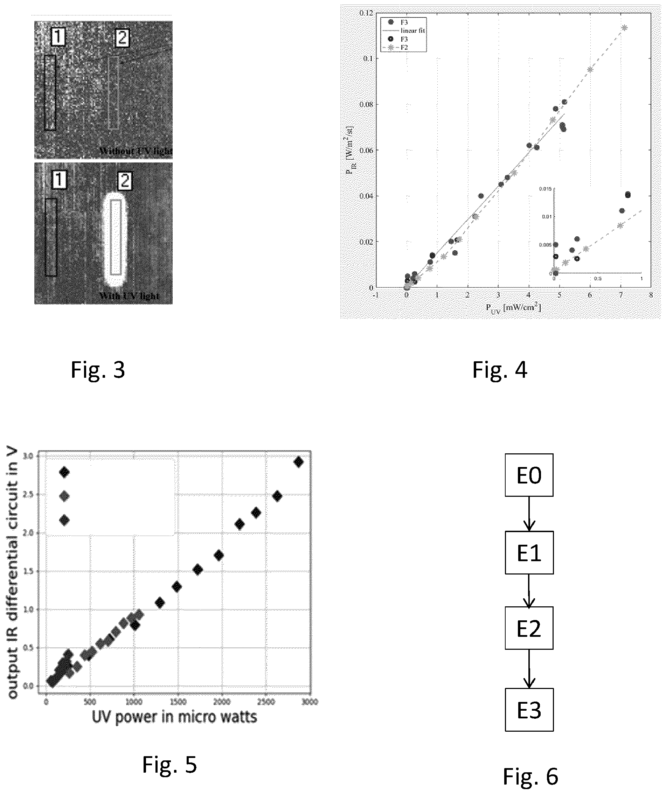

**[****Fig. 3****]** In Figure 3, we show the remarkable results obtained with this invention. For the sake of illustration, only one large foil is used for two pixel-areas, but as previously explained, the invention allows the use of smaller foils. Thus, the foil structure has less individualized segments than in other embodiments. However, using a single large foil like the one shown in this figure is compatible with the invention to demonstrate the feasibility of the invention.

A UV radiation source is installed in front of the collimator box (not shown). On the other side of the system, the carbon coating side of the gold foil is imaged with an IR camera, and this image is shown in Figure 3. The upper part of the figure shows the image when no UV radiation is present, while the second part of the figure shows the image when the UV radiation source is directed towards foil 2.

The labels 1 and 2 and the associated rectangles indicate the positions of two conversion foils. An increase in the temperature is successfully detected on one foil but not in the adjacent one (label 1). This demonstrates the absence of crosstalk among the channels. The heat of one segment of the foil structure does not reach the neighboring segments of the foil structure.

**[****Fig. 4****]** Further, the detector response for each pixel can be calibrated with prior knowledge of the UV power sent to the conversion foil through the collimator line of sight. A scan of the UV power provides the calibration function for the detector.

In Figure 4, the detection unit assembly is an IR camera and is installed approximately 1 meter away from the conversion foil. The y-axis shows the IR power measured while the x-axis shows the incident UV radiation power per surface unit. The result is very much a linear relation between the two sets of values. This clearly shows that each pixel can be calibrated.

**[****Fig. 5****]** In Figure 5, the detection unit is a thermopile and is installed several millimeters away from the conversion foil. Again, the y-axis shows the response in Volt of the thermopile while the x-axis shows the incident UV radiation power. The result is again very much a linear relation between the two sets of values.

A calibration is performed for each individual pixel. After this calibration, it is straightforward to calculate the power of the UV or soft X-rays reaching the conversion foil, by measuring the intensity of the IR radiation with the detector.

Several devices of this type can be used to image confined plasma.

**[****Fig. 6****]** In Figure 6, the following steps are presented:
- in step E0, the geometry of the scene to be imaged is determined, and through computer-assisted design (CAD), the dimensions and shapes of the ducts forming fields of view are determined,
- in step E1, the collimator block is made based on the results of the CAD step in E0, by 3D printing or by drilling ducts in an already cast block,
- in step E2, the made device is calibrated pixel by pixel,
- in step E3, the scene is imaged using the calibrated device.

## Claims

1. A bolometer assembly comprising a collimator structure (4B) having a front surface for entry of radiations into the bolometer assembly, a conversion unit (3) having a first and a second opposite faces, the first face (3A) being orientated towards the said front surface, the conversion unit (3) being configured to perform absorption of radiations through the first face (3A) in the UV and/or soft X-ray range and, in reaction to said absorption, emit IR radiations through the second face (3B), the bolometer assembly further comprising an IR detector unit (2) having on an imaging surface several independent pixels sensors, said imaging surface is directed toward the second face (3B), the bolometer assembly being further **characterized in that** the collimator structure (4B) comprises separate internal ducts (6B) each delimited by walls (6Bw) and forming fields of view, each extending from a respective aperture in the front surface to a respective conversion surface of the conversion unit (3).

2. A bolometer assembly according to claim 1, **characterized in that** the bolometer assembly further comprises a detector supporting unit (4A), the conversion unit (3) being positioned between the detector supporting unit (4A) and a back surface of the collimator structure (4B) or integrated into the collimator structure (4B) as the back surface of the collimator structure (4B ).

3. A bolometer assembly according to claim 1 or claim 2, **characterized in that** the conversion unit (3) comprises conversion foils each laterally delimited for covering the exit of one internal duct (6B) forming a field of view and forming the respective conversion surfaces.

4. A bolometer assembly according to any of claims 1 to 3, **characterized in that** it comprises cooling fluid pipes (5A) or water boxes for having cooling fluid circulating around the conversion surfaces of the conversion unit (3).

5. A bolometer assembly according to any of claims 1 to 4, **characterized in that** the internal ducts (6B) forming fields of view each have transversal cross-sections that progressively taper from the front surface to the conversion unit (3) and lead the radiation from an area of the front surface adapted to cover a specific solid angle to an area of the conversion unit (3).

6. A bolometer assembly according to any of claims 1 to 5, **characterized in that** the conversion unit (3) comprises foils of gold or platinum and is coated with carbon.

7. A bolometer assembly according to any of claims 1 to 5, **characterized in that** the conversion unit (3) comprises foils of an alloy of gold or platinum and any other material radiating in the IR range.

8. A bolometer assembly according to any of claims 1 to 7, **characterized in that** the pixel sensors are diodes, thermopiles, fibers, or form a camera.

9. A bolometer assembly according to any of claims 1 to 8, **characterized in that** the collimator structure (4B), including the walls (6Bw), is made of a radiation impervious material.

10. A method of imaging a radiation emitter scene of known geometry, comprising designing (E0) of the internal ducts (6B) forming fields of view of a bolometer assembly according to any of claims 1 to 9 to form dedicated lines of sight for respective parts of the said radiation emitter scene of known geometry, making (E1) the bolometer assembly including the designed internal ducts (6B) forming fields of view and further calibrating (E2) each line-of-sight and eventually performing (E3) an imaging of the radiation emitter scene with the bolometer assembly having the calibrated lines of sight.

11. A method of imaging a radiation emitter scene of known geometry, according to claim 10, **characterized in that** making (E1) the bolometer assembly comprises using three-dimensional printing to create the designed internal ducts forming fields of view.
